# FASCICULE DE BREVET EUROPEEN

(11) **EP 0 951 123 B1**
(45) Date de publication et mention de la délivrance du brevet: **30.05.2007**
(21) Numéro de dépôt: 99410035.2
(22) Date de dépôt: 15.04.1999
(51) Int. Cl.: H02B 11/133, H01H 3/30

(54) **Disjoncteur débrochable comportant un levier de commande de l'ouverture et de la fermeture de pôles**
Trennbarer Schalter mit einem Schalthebel zum Öffnen und Schliessen der Phasen
Disconnectable circuit breaker with an operating lever for opening and closing the poles

(30) Priorité: 17.04.1998 FR 9805120
(43) Date de publication de la demande: 20.10.1999
(73) Titulaire: SCHNEIDER ELECTRIC INDUSTRIES SAS, 92500 Rueil-Malmaison (FR)
(72) Inventeur: Coudert, Patrick, 38050 Grenoble cedex 09 (FR); Gerbert-Gaillard, Alain, 38050 Grenoble cedex 09 (FR); Perroud, Michel, 38050 Grenoble cedex 09 (FR)
(74) Mandataire: Ritzenthaler, Jacques

(56) Documents cités:
- EP-A- 0 222 645
- EP-A- 0 227 586

## Description

L'invention concerne un appareillage de coupure comportant un châssis fixe et un disjoncteur qui peut être inséré ou extrait du châssis fixe. Elle se rapporte plus précisément au disjoncteur destiné à un tel appareillage.

Un appareillage de coupure de ce genre, décrit dans le document EP-A-O 227 586. Son disjoncteur comporte une paire de contacts par pôle, l'un des contacts étant mobile et pouvant prendre par rapport à l'autre une position de fermeture correspondant au contact mécanique et électrique et une position d'ouverture. Le disjoncteur est muni d'un dispositif d'ouverture des pôles comportant un ressort dit d'ouverture apte à passer d'un état armé à un état libéré et de l'état libéré à l'état armé, et un verrou dit d'ouverture apte à verrouiller le ressort d'ouverture dans son état armé, le ressort d'ouverture étant associé au contact mobile de façon à ce que la libération du ressort d'ouverture entraîne le contact mobile vers une position d'ouverture et à ce que le déplacement du contact mobile vers sa position de fermeture entraîne l'armement du ressort d'ouverture. Le disjoncteur est équipé en outre d'un dispositif de fermeture muni d'un accumulateur d'énergie. Un ressort dit de fermeture, constituant l'accumulateur d'énergie, est apte à passer d'un état armé à un état détendu. Un verrou dit de fermeture peut verrouiller le ressort de fermeture dans son état armé. Le ressort de fermeture est associé au contact mobile de façon à ce que la détente du ressort de fermeture entraîne le contact mobile vers sa position de fermeture.

Le châssis comporte des bornes principales raccordées au circuit électrique de puissance, par exemple par un jeu de barres extérieures, et destinées à coopérer avec les bornes des pôles du disjoncteur par l'intermédiaire de pinces d'embrochage. Il comporte également des connecteurs auxiliaires destinés à coopérer avec des connecteurs correspondants du disjoncteur pour fermer un circuit électrique de commande du disjoncteur. Le châssis est conformé en caisson et comprend une ouverture en face avant, permettant l'introduction du disjoncteur, ainsi que des glissières assurant le support et le guidage du disjoncteur dans le châssis. Le châssis est muni d'une chaîne cinématique d'embrochage comportant un arbre primaire destiné à coopérer avec une manivelle amovible et un élément de sortie destiné à coopérer avec le disjoncteur. La chaîne cinématique est apte à prendre une position embrochée, correspondant à un état embroché du disjoncteur dans lequel les bornes du disjoncteur sont solidarisées aux bornes correspondantes du châssis, une position débrochée, correspondant à un état débroché du disjoncteur dans lequel celui-ci n'est connecté au châssis ni par ces bornes principales ni par ses connecteurs auxiliaires et une position intermédiaire de test correspondant à un état de test du disjoncteur dans lequel celui-ci est connecté au châssis par ses connecteurs auxiliaires, alors que ses bornes principales sont déconnectées. Lorsque la chaîne cinématique est en position débrochée, il est possible de désolidariser le disjoncteur de la chaîne cinématique pour l'extraire complètement du châssis.

Le disjoncteur est muni d'une commande d'ouverture destinée à assurer que les pôles sont ouverts lorsque la chaîne cinématique quitte sa position embrochée ou qu'elle s'en approche. Cette fonction est essentielle pour la sécurité du dispositif. En effet, si les pôles du disjoncteur étaient fermés lors de l'embrochage ou du débrochage et qu'était appliquée une tension aux bornes de connexion du châssis, on assisterait à un arc électrique destructif entre les bornes de connexion du disjoncteur et celle du châssis. Pour des raisons de fiabilité, cette commande doit être mécanique, de manière à assurer un fonctionnement correct même en cas de défaillance des circuits électriques de commande du disjoncteur. Cette fonction est donc réalisée par une commande comportant un élément mobile relié par une tringlerie au verrou d'ouverture et apte à prendre une information relative à la présence de la manivelle amovible d'entraînement de la chaîne cinématique d'embrochage. Aussi longtemps que la manivelle est en position active, l'élément mobile garde une position telle qu'il impose au verrou d'ouverture de rester dans sa position déverrouillée.

Par ailleurs le disjoncteur décrit dans EP-A-O 227 586 est muni d'un dispositif qui garantit que le verrou d'ouverture et le verrou de fermeture du disjoncteur sont placés dans leur position déverrouillée, aussi longtemps que l'appareil est extrait de son châssis. Ce dispositif répond à l'usage qui impose dans certains pays que les manipulations qui permettront l'extraction du disjoncteur de son châssis donnent lieu à des séquences automatiques afin que le disjoncteur en fin de phase d'extraction soit ouvert et que son dispositif d'accumulation d'énergie soit désarmé, ceci dans le souci d'éviter tout risque d'accident pour l'opérateur qui aurait à manipuler ou démonter le disjoncteur. En pratique, le disjoncteur est muni d'un dispositif de commande comportant un levier apte à prendre une information sur une came solidaire du châssis fixe de l'appareillage, ainsi qu'une tringlerie de transmission du mouvement du levier aux verrous de fermeture et d'ouverture. Dans une première position du levier de commande, les verrous sont libres de prendre leur position verrouillée ou déverrouillée. Dans une deuxième position du levier, la tringlerie impose aux deux verrous de prendre leur position déverrouillée. Des ressorts de rappel sollicitent le levier de commande vers sa deuxième position. Lorsque le disjoncteur se trouve dans le châssis fixe, le levier coopère avec une came solidaire du châssis fixe, qui lui impose de prendre sa première position: les verrous peuvent alors prendre leur position déverrouillée ou verrouillée suivant les ordres transmis par d'autres dispositifs de commande du disjoncteur. Lorsque le disjoncteur est extrait du châssis fixe et dépasse sa position débrochée, le levier de commande n'est plus en contact avec la came du châssis et prend sa deuxième position sous la sollicitation des ressorts de rappel, entraînant le verrou d'ouverture et le verrou de fermeture dans leur position déverrouillée.

Mais l'usage décrit ci-dessus n'est pas universel car il comporte quelques inconvénients. On notera par exemple que l'extraction du disjoncteur selon la séquence décrite ci-dessus peut donner lieu à une décharge du ressort de fermeture alors que le verrou d'ouverture est maintenu en position ouverte. Dans un tel cycle, dit de décharge sur pôles ouverts ou de décharge à vide, l'énergie du ressort de fermeture est totalement absorbée par des butées de fin de courses qui, dans les cycles d'ouverture et de fermeture classiques, n'ont à absorber qu'une énergie dix fois moins importante. Ceci impose soit un surdimensionnement coûteux soit un compromis sur l'endurance du dispositif. Aussi certains utilisateurs ne souhaitent-ils pas que l'extraction du disjoncteur donne lieu à un désarmement forcé du dispositif et limitent leurs exigences à l'ouverture des pôles lors du débrochage. On est donc en présence de deux marchés aux exigences différentes, l'un imposant que le ressort de fermeture soit détendu à la fin de l'extraction et l'autre imposant que l'extraction n'ait pas d'influence sur l'état armé ou non du ressort de fermeture.

Le dispositif décrit dans EP-A-0 227 586 n'est pas facilement adaptable à l'ensemble des marchés auxquels est destinée une gamme de disjoncteurs. Pour que le montage de la commande d'ouverture et de désarmement soit possible à un stade avancé de la fabrication du disjoncteur, les éléments de la commande doivent nécessairement être placés sur l'une des faces latérales du disjoncteur, ce qui impose des contraintes supplémentaires et rend le dispositif vulnérable aux chocs, notamment lors de l'extraction et de la dépose du disjoncteur. De plus, le dispositif est complexe puisqu'il impose une superposition de deux commandes mécaniques d'ouverture, l'une destinée à l'ouverture lors de l'embrochage et du débrochage, c'est-à-dire entre la position embrochée et la position test, l'autre à l'ouverture lors de l'extraction et de l'insertion, entre la position débrochée et la position extraite.

Un objectif de l'invention est de réduire les différences structurelles entre le disjoncteur destiné au marché imposant que le ressort de fermeture soit détendu à la fin de l'extraction et le marché imposant que l'extraction n'ait pas d'influence sur l'état armé ou non du ressort de fermeture. Un autre objectif est de réduire le travail de montage nécessaire pour assurer la différenciation entre les disjoncteurs destinés aux deux marchés et de permettre que ce montage se fasse à un stade avancé de la construction du disjoncteur. Un autre objectif est de rendre le disjoncteur plus fiable en réduisant la vulnérabilité des mécanismes de commandes notamment lors de l'extraction et des manipulations du disjoncteur.
Selon l'invention, ces problèmes sont résolus avec un disjoncteur comportant au moins une paire d'organes de contact dont l'un au moins est mobile et peut prendre par rapport à l'autre une position de fermeture correspondant au contact mécanique et électrique et une position d'ouverture, un dispositif d'ouverture comportant un verrou dit d'ouverture apte à prendre une position verrouillée dans laquelle il interdit le passage de l'organe de contact mobile de sa position de fermeture à sa position d'ouverture et une position déverrouillée dans laquelle il autorise ce passage, un dispositif d'armement comportant un ressort dit de fermeture destiné, lors de sa détente, à déplacer l'organe de contact mobile vers sa position de fermeture, et un verrou dit de fermeture apte à verrouiller le ressort de fermeture dans son état bandé, caractérisé en ce qu'il comporte un organe mobile de commande accessible par l'extérieur du disjoncteur et apte à prendre une position inopérante dans laquelle il n'interagit ni avec le verrou d'ouverture ni avec le verrou de fermeture, une position de première commande d'ouverture et une position de commande de désarmement, l'organe mobile de commande étant apte à déverrouiller le verrou d'ouverture en passant de sa position inopérante à sa position de première commande d'ouverture, et à déverrouiller le verrou de fermeture en passant de sa position de première commande d'ouverture à sa position de commande de désarmement. Ainsi suffit-il, pour satisfaire les deux marchés décrits précédemment, de manoeuvrer différemment l'organe mobile de commande: s'il n'est pas exigé de débander le ressort de fermeture lors de l'extraction, l'organe mobile n'est utilisé qu'entre sa position inopérante et sa position de première commande d'ouverture pour l'ouverture des pôles lors du débrochage; si par contre l'utilisateur souhaite une décharge du ressort d'accumulation lors de l'extraction, l'organe mobile est utilisé à la fois pour l'ouverture lors du débrochage et pour la décharge du ressort lors de l'extraction au-delà de la position débrochée. La différenciation entre les deux modes de fonctionnement est obtenue essentiellement par la forme des cames fixées au châssis de l'appareillage et destinées à coopérer avec l'organe mobile. Le nombre de pièces qui doivent être accessibles de l'extérieur du disjoncteur est ainsi réduit au minimum, puisque la modification du mode de fonctionnement pour satisfaire l'un ou l'autre des marchés ne nécessite pas la modification de nombreuses pièces mobiles du disjoncteur. Le travail d'adaptation se trouve donc facilité et la vulnérabilité aux chocs réduite.

Préférentiellement, le disjoncteur comporte un ressort de rappel de l'organe mobile de commande vers sa position inopérante et un organe mobile de retenue apte à prendre une position de retenue dans laquelle il retient l'organe mobile de commande dans une position autre que la position inopérante et une position de libération dans laquelle il n'interagit pas avec l'organe mobile de commande. Le fait que l'organe mobile soit rappelé vers sa position inopérante, rend particulièrement simple la commande d'ouverture lors du débrochage. L'organe de retenue rend possible le maintien du disjoncteur extrait dans son état ouvert désarmé. Ce dispositif permet également à l'opérateur averti, désirant effectuer des séquences de fermeture et d'ouverture sur le disjoncteur extrait pour une opération de maintenance particulière, d'agir sur l'organe de retenue pour libérer l'organe mobile de commande. Le dispositif obtenu est simple et d'utilisation intuitive.

Préférentiellement, l'organe mobile de commande est un levier. Il est néanmoins également envisageable d'utiliser d'autres types d'éléments mobiles, par exemple des tringles ou des tirettes guidées en translation.

Un fonctionnement particulièrement simple est obtenu lorsque l'organe mobile de commande, en passant de sa position de première commande d'ouverture à sa position de commande de désarmement, est apte à maintenir en position déverrouillée le verrou d'ouverture. Dans ce cas, le passage de l'organe mobile de sa position de première commande d'ouverture à sa position de commande de désarmement provoque une décharge à vide du ressort d'accumulation, c'est-à-dire une détente du ressort d'accumulation qui ne provoque pas la fermeture des pôles.

Alternativement, l'organe mobile de commande est apte à prendre une position de deuxième commande d'ouverture, la position de commande de désarmement étant située entre la position de première commande d'ouverture et la position de deuxième commande d'ouverture, et en ce que l'organe mobile de commande, en passant dans sa position de commande de désarmement, n'interagit pas avec le verrou d'ouverture. Ce mode de fonctionnement permet d'aboutir à un état ouvert désarmé sans provoquer de décharge à vide, ce qui s'avère avantageux pour l'endurance et la fiabilité du dispositif.

Lorsque le disjoncteur est destiné à une utilisation dans laquelle la position de commande de désarmement de l'organe mobile de commande n'est pas utilisée, l'accès à cette position est préférentiellement bloqué par un moyen de blocage, par exemple une butée rentrant en contact avec l'organe mobile de commande avant que celui-ci n'atteigne la position de commande de désarmement. La différenciation structurelle entre les disjoncteurs destinés l'un ou l'autre marché se réduit donc à la présence ou l'absence d'une butée.

L'invention porte également sur un appareillage de coupure comportant un disjoncteur tel que défini précédemment et un châssis externe fixe pourvu d'une chaîne cinématique d'embrochage comportant au moins un arbre primaire guidé en rotation par rapport au châssis et destiné à coopérer avec un organe d'entraînement, et un organe de sortie apte à coopérer avec le disjoncteur de sorte que la rotation de l'arbre primaire provoque le mouvement de la chaîne cinématique de transmission entre une position débrochée et une position embrochée et le passage correspondant du disjoncteur de manière réversible d'un état débroché à un état embroché, dont le châssis ou la chaîne cinématique d'embrochage comporte en outre au moins un organe de liaison à l'organe mobile de commande, apte à coopérer directement ou indirectement avec l'organe mobile de commande de manière à le faire passer dans sa position de première commande d'ouverture lorsque le disjoncteur ou la chaîne cinématique de transmission passe par une première position indexée, dans le sens du débrochage. Préférentiellement le châssis ou la chaîne cinématique d'embrochage comporte en outre au moins un organe de liaison à l'organe mobile de commande, apte à coopérer directement ou indirectement avec l'organe mobile de commande de manière à le faire passer dans sa position de commande de désarmement lorsque le disjoncteur passe par une deuxième position indexée par rapport au châssis, dans le sens du débrochage. Les positions indexées par l'organe de liaison peuvent être plus ou moins éloignées, voire pratiquement confondues.

Pour réaliser la fonction d'ouverture des pôles lors du débrochage, on a avantage à ce que le châssis ou la chaîne cinématique d'embrochage comporte en outre au moins organe de liaison à l'organe mobile de commande, apte à coopérer directement ou indirectement avec l'organe mobile de commande lorsque le disjoncteur est dans sa position embrochée ou à proximité de celle-ci, de telle manière que le l'organe mobile de commande passe de sa position inopérante à sa position de première commande d'ouverture lorsque le disjoncteur quitte la position embrochée. Préférentiellement l'organe de sortie de la chaîne cinématique d'entraînement comporte au moins une came d'embrochage destinée à coopérer avec un élément suiveur du disjoncteur de telle sorte que la rotation de la came d'embrochage dans un sens provoque l'embrochage du disjoncteur et que la rotation de la came d'embrochage dans le sens opposé provoque le débrochage du disjoncteur, la zone de la came d'embrochage correspondant à l'arrivée du disjoncteur dans sa position embrochée étant conformée de façon à ce qu'une rotation importante de la came d'embrochage corresponde à un déplacement faible ou nul du disjoncteur par rapport au châssis. Cette disposition facilite la détection de l'initiation du mouvement de débrochage, ce qui permet de commander l'ouverture avant qu'un déplacement significatif du disjoncteur ait eu lieu.

D'autres avantages de l'invention ressortiront de la description qui va suivre de différents modes de réalisation de l'invention, donnés à titre d'exemples non limitatifs et représentés aux dessins annexés sur lesquels:
- la figure 1 est une vue en perspective d'un châssis fixe d'un appareillage de coupure selon l'invention;
- la figure 2 est une vue d'une chaîne cinématique de transmission placée dans le châssis fixe;
- la figure 3 est une vue en perspective d'un disjoncteur selon l'invention;
- la figure 4 est un schéma de principe d'un dispositif d'ouverture des pôles du disjoncteur, en position ouverte;
- la figure 5 est un schéma de principe d'un dispositif d'armement à accumulation d'énergie du disjoncteur, en position armée;
- la figure 6 est une vue en perspective d'une partie du dispositif d'armement du disjoncteur;
- la figure 7 est une vue en perspective montrant la coopération d'un levier de commande selon l'invention avec les dispositifs d'ouverture et d'armement du disjoncteur;
- la figure 8 montre plus précisément le levier de commande dans une position inopérante;
- la figure 9 montre le levier de commande dans une position de commande d'ouverture;
- la figure 10 montre le levier de commande dans une position de commande de fermeture;
- la figure 11 montre un levier de renvoi disposé entre le levier de commande et une came d'embrochage du châssis dans une position embrochée;
- la figure 12 montre le levier de renvoi agissant sur le levier de commande lors du débrochage;
- la figure 13 est une vue en perspective d'un cliquet de retenue du levier de commande;
- la figure 14 est une vue d'un levier de renvoi destiné à coopérer avec un levier de commande selon un deuxième mode de réalisation de l'invention, dans un état embroché de l'appareillage;
- la figure 15 est une vue du levier de renvoi coopérant avec le levier de commande selon le deuxième mode de réalisation de l'invention, lorsque le disjoncteur quitte sa position embrochée;
- la figure 16 est une vue d'un levier de commande selon un troisième mode de réalisation de l'invention.

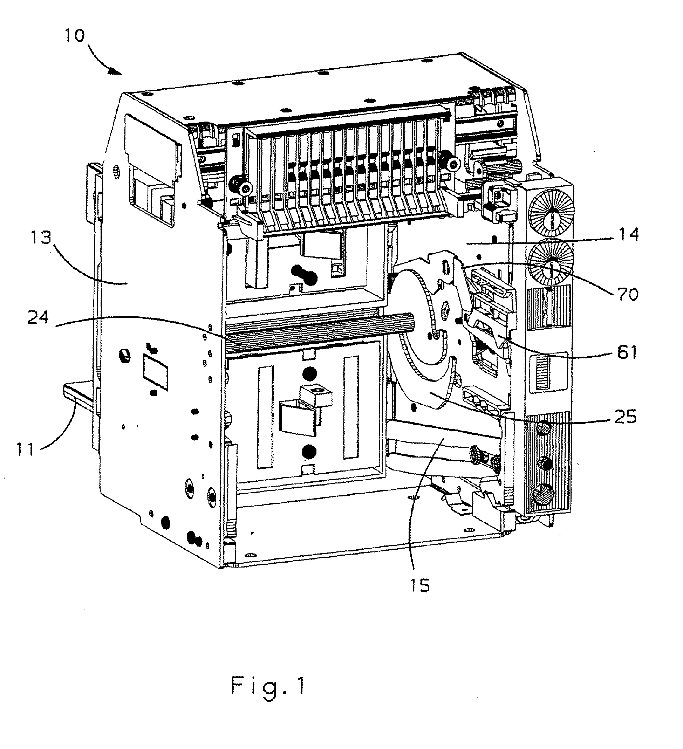

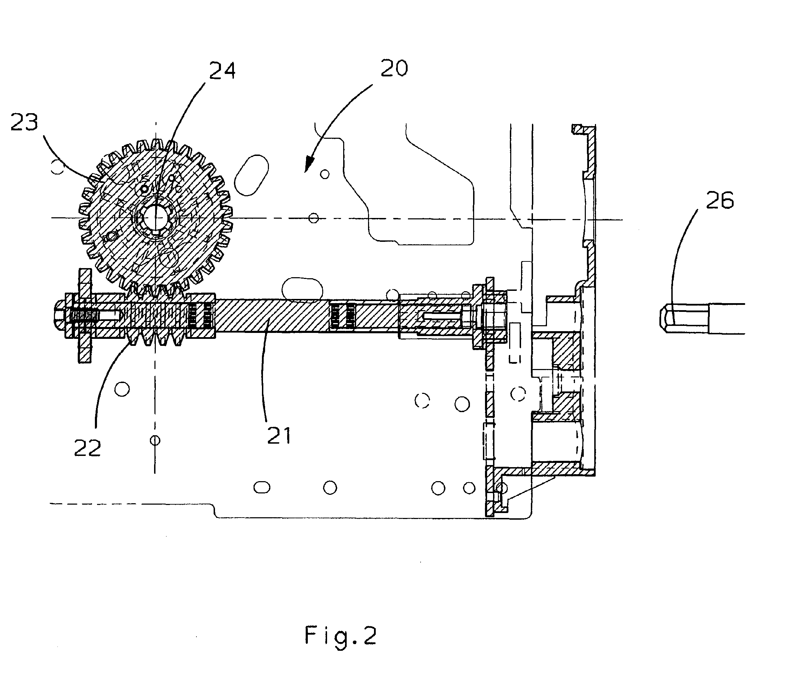

On a représenté en figure 1 le châssis externe fixe 10 d'un appareillage de coupure selon l'invention. Ce châssis permet de recevoir un disjoncteur embrochable selon l'invention. Il comporte en face arrière et de manière classique des plages de raccordement électrique 11 à un jeu de barres du réseau de distribution électrique. Sur les parois latérales 13 et 14 du châssis sont disposées des glissières 15 destinées à supporter et guider le disjoncteur dans son mouvement de translation entre sa position extraite et sa position embrochée. Le châssis supporte également dans sa partie latérale droite un mécanisme d'embrochage représenté sur la figure 2, comportant une chaîne cinématique de transmission 20 dont l'organe d'entrée menant est un arbre primaire longitudinal 21 guidé en rotation et fixe en translation par rapport au châssis 10 et l'organe de sortie mené est un arbre d'embrochage 24 transversal portant une came d'embrochage 25 à proximité de chaque paroi latérale 13, 14 du châssis. L'extrémité libre de l'arbre primaire 21 est destinée à coopérer avec une manivelle de manoeuvre 26. L'arbre menant 21 et l'arbre mené 24 sont liés l'un à l'autre par une transmission à renvoi d'angle à roue 23 et vis sans fin 22. La rotation de l'arbre menant 21 assure de manière classique la rotation des cames 25 qui entraînent chacune de façon réversible un galet du disjoncteur entre la position débrochée à la position embrochée.

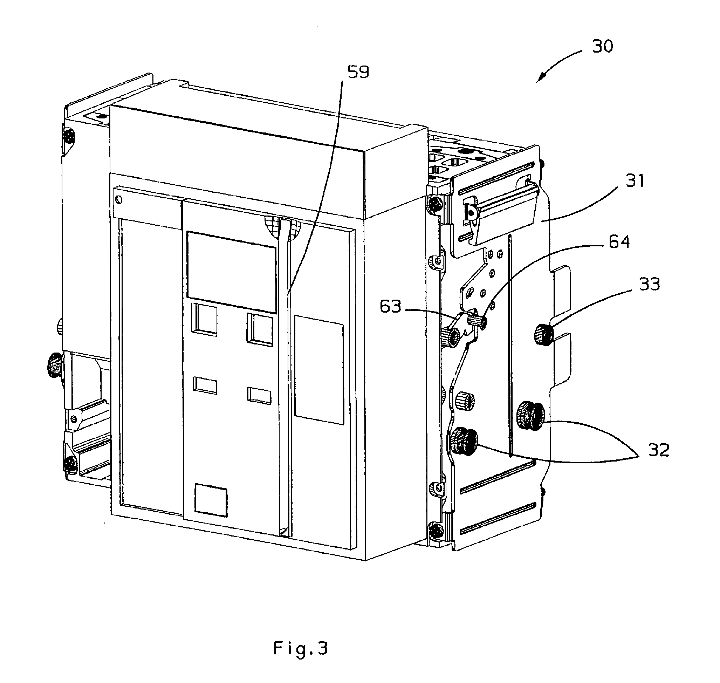

Sur la figure 3 est représenté le disjoncteur 30 hors de son châssis externe 10. Sur le disjoncteur 30 est rapporté un flasque latéral 31 qui supporte des galets 32 destinés à coopérer avec les glissières 15 du châssis et un galet 33 destiné à coopérer avec une des cames d'embrochage 25.

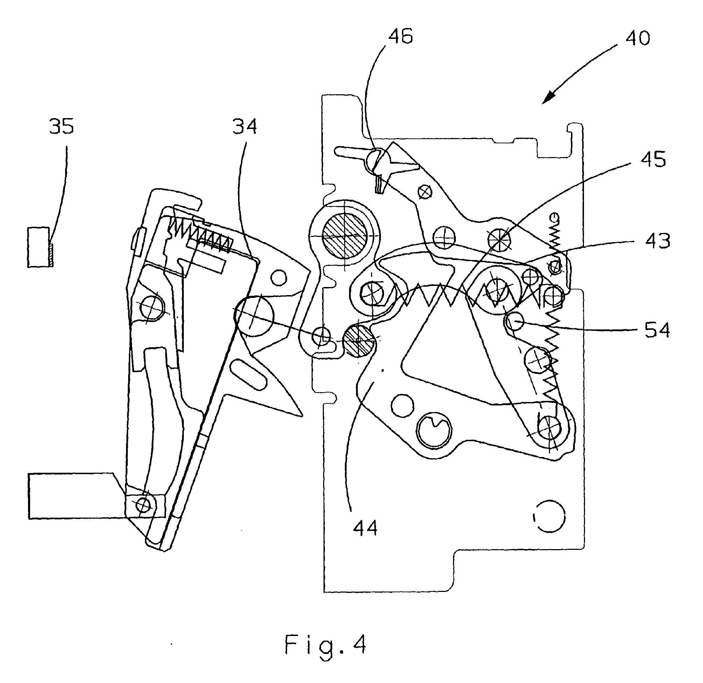

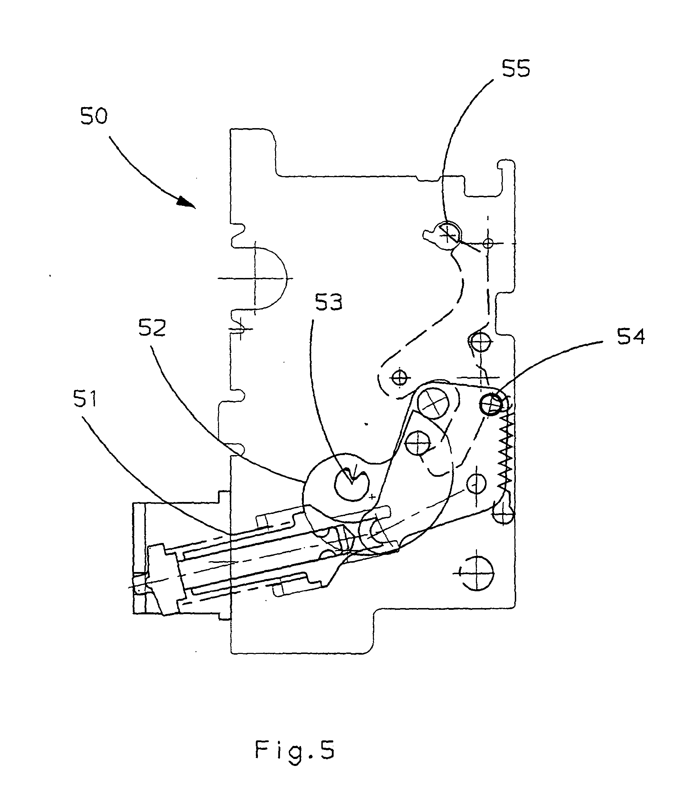

En référence aux figures 4 et 5, le disjoncteur 30 comporte, de manière connue en soi, une paire d'organes de contact 34, 35 séparables par pôle et un mécanisme de commande de l'ouverture et de la fermeture des pôles, équipé d'un accumulateur d'énergie. Ce mécanisme comprend un dispositif d'ouverture 40, visible sur la figure 4, avec une genouillère 43 associée à un crochet de déclenchement 44 et à un ressort d'ouverture 45 pour déplacer le contact mobile 34 en position d'ouverture, l'armement du ressort d'ouverture 45 se faisant automatiquement lors de la fermeture des pôles. Il comprend par ailleurs un dispositif d'armement 50 à accumulation d'énergie visible sur la figure 5, comprenant au moins un ressort de fermeture 51 pour déplacer le contact mobile 34 vers sa position de fermeture, l'armement du ressort de fermeture 51 étant opéré par une came de réarmement 52 clavetée sur un arbre 53.

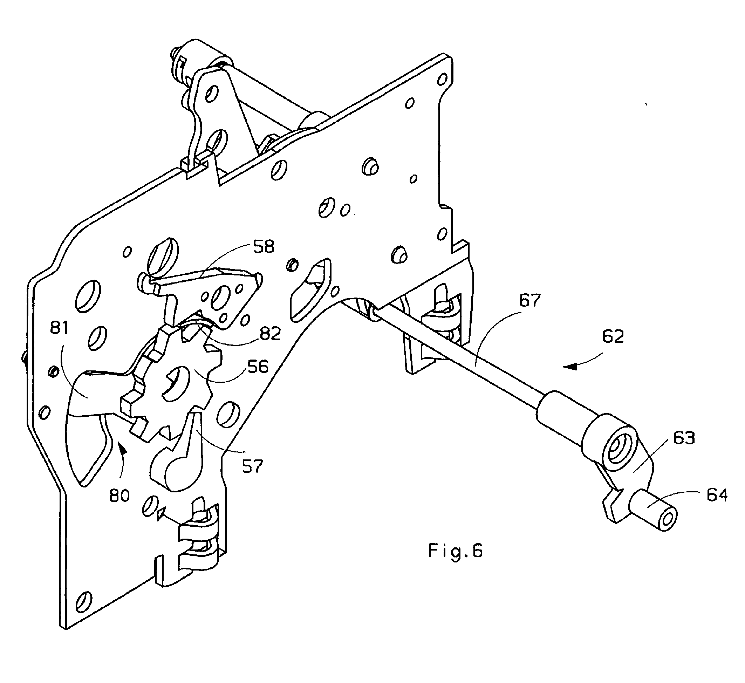

Une roue à rochet 56, visible sur la figure 6, est clavetée sur l'arbre 53 et coopère avec un cliquet anti-retour 57 et un cliquet d'entraînement 58. Les deux cliquets sont munis de ressorts de rappel non représentés, tendant à les amener dans une position de coopération avec la roue à rochet 56. L'axe du cliquet anti-retour 57 est supporté par un flasque de support du disjoncteur. Ce cliquet 57 interdit la rotation de la roue à rochet 56 dans le sens rétrograde sur la figure. La roue à rochet 56 et le cliquet 57 constituent donc ensemble un accouplement à roue libre entre l'arbre 53 et le flasque de support solidaire du disjoncteur. Une manette oscillante 59 (figure 3), qui constitue l'organe d'entraînement du dispositif d'armement, est montée pivotante autour d'un axe imaginaire géométriquement confondu avec celui de l'arbre 53. L'axe du cliquet d'entraînement 58 est solidaire d'une coupelle non représentée, elle-même solidaire de la manette 59. Le cliquet 58 coopère avec la roue à rochet 56 de manière à s'opposer au mouvement rotatif de la roue à rochet 56 par rapport au cliquet 58 et à la manette oscillante 59 dans le sens rétrograde sur la figure 6. La roue à rochet 56 constitue donc avec le cliquet d'entraînement 58 un embrayage à roue libre entre l'organe menant constitué par la manette 59 d'une part et l'arbre 53 constituant un organe mené de l'autre. Le pivotement de la manette dans le sens direct se traduit par une rotation de l'axe du cliquet d'entraînement 58 autour de l'axe de l'arbre 53 qui entraîne la roue à rochet 56 et l'arbre 53 dans le sens direct.

Un verrou de fermeture 55 (figure 5) permet de verrouiller la came 52 en position armée, puis de la déverrouiller, permettant ainsi la détente brusque du ressort de fermeture 51. Le dispositif d'armement 50 à accumulation d'énergie est relié au mécanisme d'ouverture 40 par un doigt 54 agissant sur la genouillère 43 de telle façon que la détente du ressort de fermeture 51 entraîne le dispositif d'ouverture 40 vers sa position d'ouverture. Un tel dispositif et son fonctionnement sont décrits en détail dans le document EP-A-0 222 645, dont la description est sur ces points incorporée ici par référence. Le verrou d'ouverture 46 et le verrou de fermeture 55 sont sollicités par des ressorts de rappel vers leur position de verrouillage.

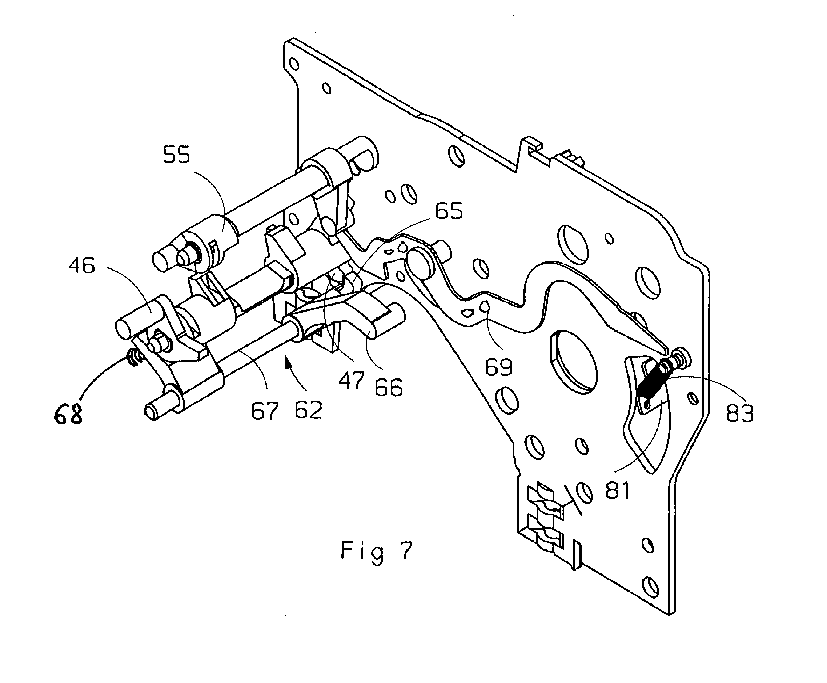

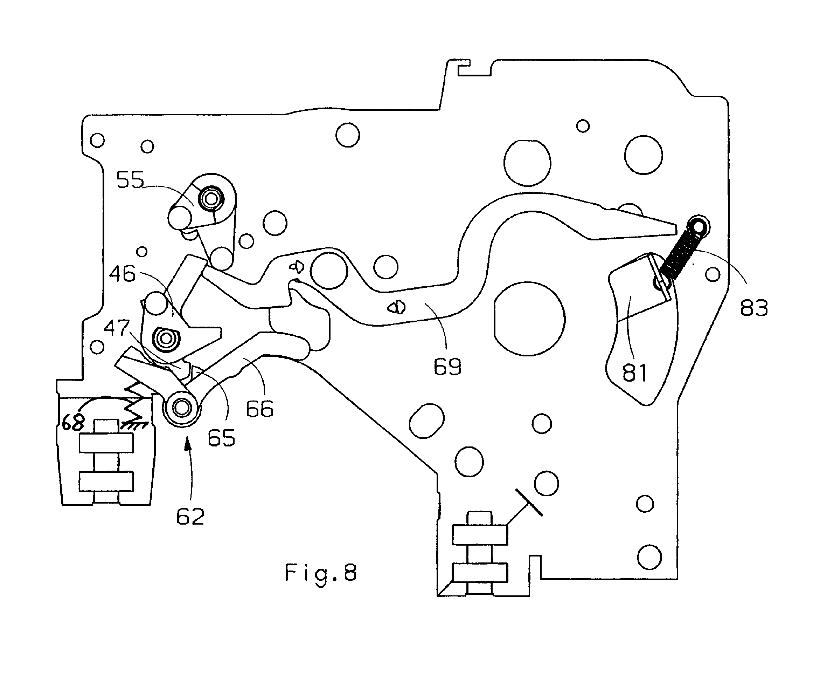

On distingue sur les figures 3 et 6 un bras menant 63 d'un levier de commande 62 d'une commande de pré-déclenchement 60, ce bras menant 63 comportant un doigt 64 destiné à coopérer avec une came 61 solidaire de la paroi latérale 14 du châssis 10 (cf. figure 1), lors du déplacement du disjoncteur entre la position débrochée et la position extraite. Le levier de commande 62 comporte en outre un premier bras mené 65, un deuxième bras mené 66, visibles sur les figures 7 à 10, et un arbre 67 solidarisant les trois bras 63, 65 et 66. Le levier de commande 62 est apte à prendre une position inopérante, une position de commande d'ouverture et une position de commande de fermeture, représentées respectivement sur les figures 8, 9 et 10. Il est rappelé vers sa position inopérante dans le sens rétrograde sur les figures, par un ressort de rappel 68 travaillant en compression par rapport à un flasque du disjoncteur.

Le premier bras mené 65 du levier 62 est apte à coopérer avec un ergot 47 du verrou d'ouverture 46. Le deuxième bras mené 66 est apte à coopérer avec un levier intermédiaire 69 à trois surfaces d'appui. Le levier intermédiaire 69 est apte à coopérer avec le verrou de fermeture 55 et avec un levier cache-cliquet 81 d'un mécanisme déclencheur 80 qui fait l'objet d'une demande de brevet déposée le même jour que la présente demande, et dont le contenu est sur ce point incorporé ici par référence. Le mécanisme déclencheur 80, visible sur la figure 6, assure une fonction de débrayage entre la manette oscillante 59 de réarmement et la came de réarmement 52 du dispositif d'armement 50. Le levier cache cliquet 81 pivote autour de l'axe de rotation commun à l'arbre 53 et à la manette oscillante 59 entre une position de repos et une position active. Il comporte une plaque 82 qui, dans la position active, vient s'interposer entre la roue à rochet 56 et le cliquet d'entraînement 58. Le levier cache cliquet est sollicité par un ressort de rappel 83 vers sa position de repos.

Par ailleurs, un levier de renvoi 70, visible sur les figures 1, 11 et 12, est monté pivotant sur la paroi 14 du châssis 10 et coopère par l'extrémité d'un de ses bras formant rampe, avec un doigt excentrique 27 solidaire de la came d'embrochage 25. L'autre bras du levier de renvoi 70 forme également une rampe destinée à coopérer avec le doigt 64 du levier de commande 62 dans la position embrochée du disjoncteur. Le levier est rappelé vers sa position de contact avec le doigt 27, par un ressort 78.

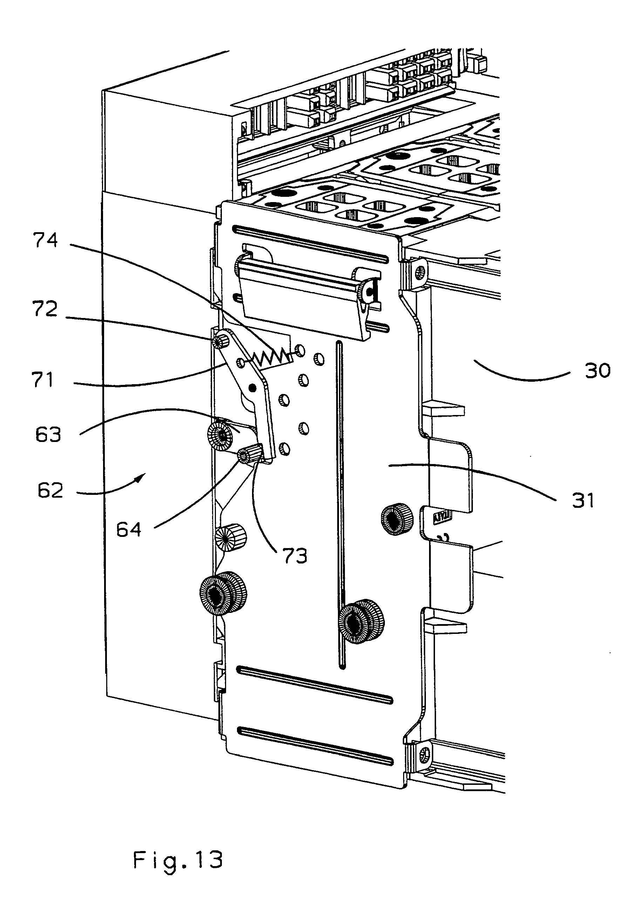

Sur le disjoncteur 30 est monté pivotant un cliquet de retenue 71, représenté sur la figure 13. L'un des bras de ce cliquet 71 comporte un doigt 72 destiné à coopérer avec une rampe de la came 61 solidaire du châssis 10 alors que l'autre bras comporte une encoche 73 apte à coopérer avec le doigt 64 du levier de commande 62 lorsque celui-ci est dans sa position de commande de fermeture. Le cliquet 71 est rappelé vers le levier 62 par un ressort 74.

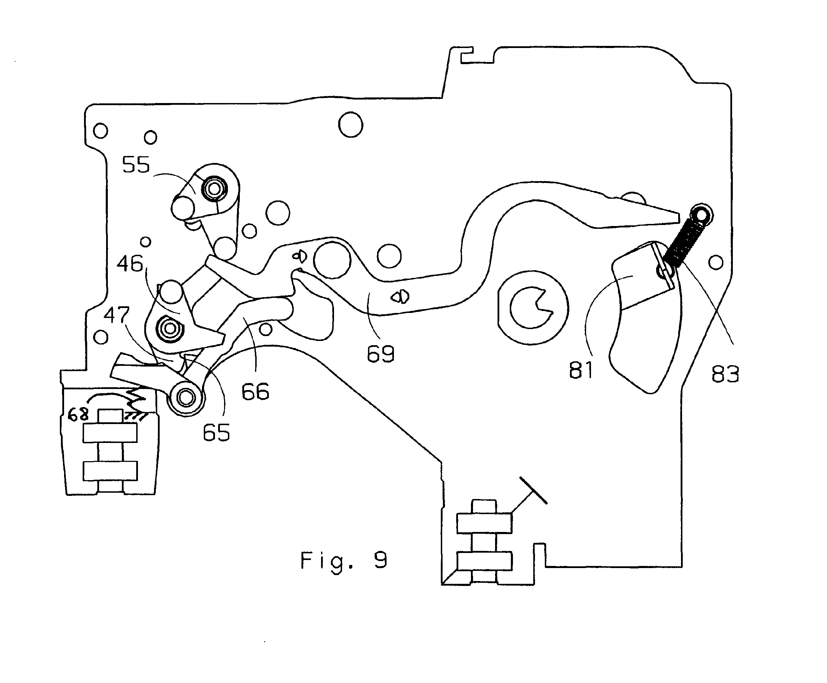

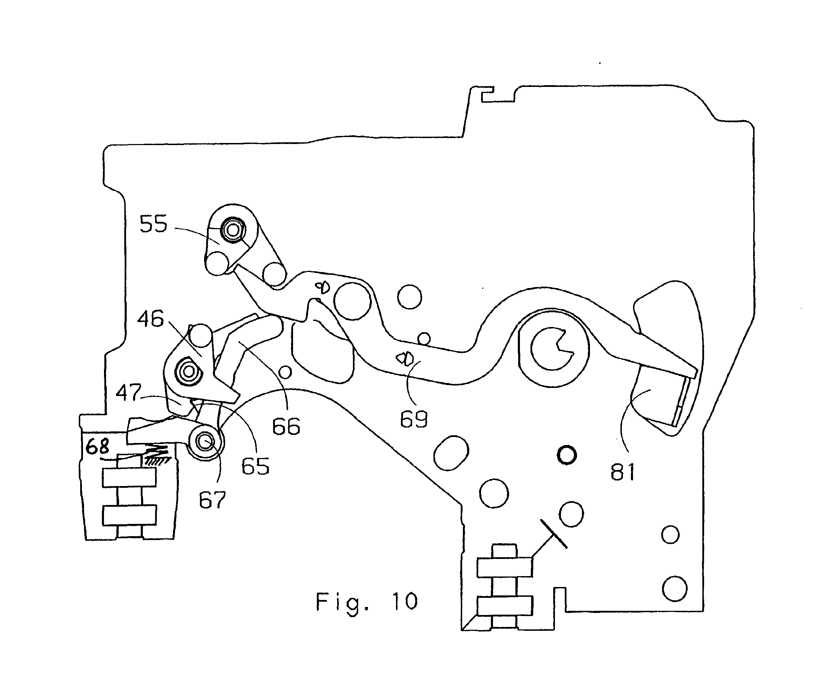

L'action du levier de commande sur les verrous d'ouverture et de fermeture est la suivante. En position inopérante (figure 8), le levier de commande 62 n'interfère ni avec le verrou d'ouverture 46 ni avec le levier intermédiaire 69. En passant dans sa position de commande d'ouverture par pivotement dans le sens direct sur la figure 9, le levier de commande 62 coopère par son premier bras mené 65 avec le verrou d'ouverture 46 et entraîne celui-ci dans sa position de déverrouillage. Par conséquent, les pôles du disjoncteur sont nécessairement ouverts à la fin de ce processus. En passant dans sa position de commande de fermeture dans le sens direct sur la figure 10, le levier de commande 62 coopère par son deuxième bras mené 66 avec le levier intermédiaire 69 et fait pivoter celui-ci dans le sens rétrograde sur la figure. Le levier intermédiaire 69 entraîne ainsi quasi-simultanément d'une part le verrou de fermeture 55 dans sa position de déverrouillage et d'autre part le cache cliquet 81 dans une position telle la plaque 82 du cache cliquet 81 s'interpose entre le cliquet d'entraînement 58 et la roue à rochet 56 et découple ainsi complètement l'arbre 53 de la manette 59. Dans le même temps, le verrou d'ouverture 46 couvre une course morte au-delà de sa position déverrouillée. Si le ressort de fermeture 51 était initialement armé, ce processus donne lieu à une décharge du ressort 51. Cette décharge est une décharge à vide puisque le verrou d'ouverture 46 continue de coopérer avec le levier de commande 62 et ne peut revenir dans sa position de verrouillage.

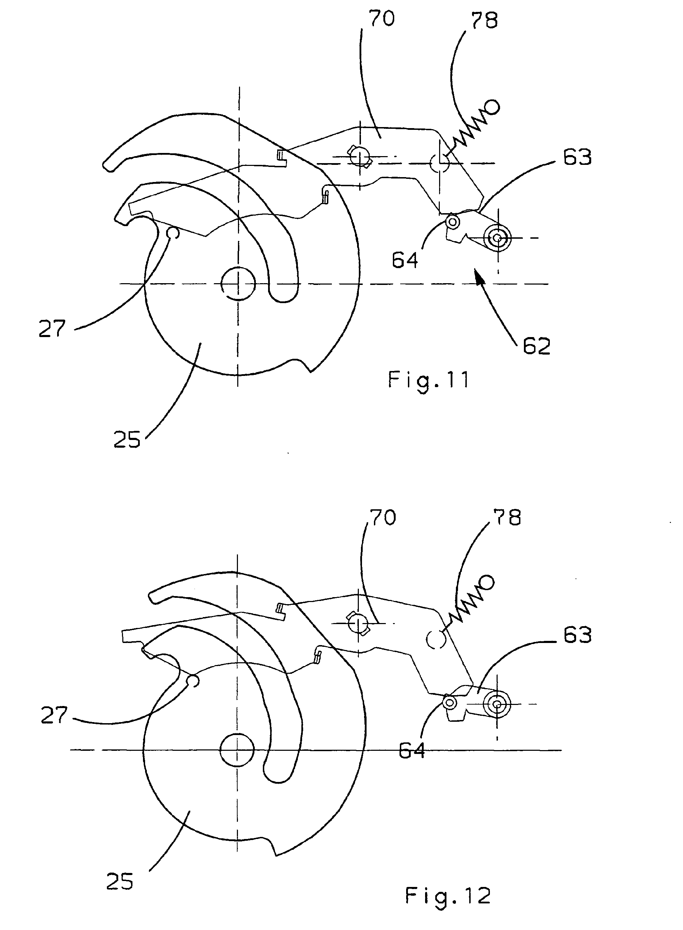

L'action du levier de commande 62 dans ses différentes positions étant décrite, le fonctionnement du dispositif lors de l'extraction du disjoncteur est le suivant. En position embrochée, la came d'embrochage 25 est dans la configuration représentée sur la figure 11. Le levier de renvoi 70 est en contact avec le doigt 27 de la came 25 et avec le doigt 64 du levier de commande 62 qui est dans sa position inopérante. Lorsque commence la phase de débrochage, la came d'embrochage 25 pivote dans le sens rétrograde et prend la position représentée sur la figure 12. La came 25 est conformée de telle manière que cette rotation induise un déplacement nul ou de très faible amplitude du galet 33 du disjoncteur. Par conséquent, les pinces d'embrochage réalisant la liaison mécanique et électrique entre les bornes du disjoncteur et celle du châssis ne sont pratiquement pas sollicitées dans cette phase. Du fait de la rotation de la came d'embrochage 25, le doigt 27 entraîne le levier de renvoi 70 dans le sens rétrograde, ce qui fait pivoter le levier de commande 62 dans le sens direct jusqu'à sa position de commande d'ouverture. Il y a donc déverrouillage du verrou d'ouverture: le disjoncteur se retrouve donc ouvert, quelle qu'ait été son état précédent. Du fait de la poursuite de la rotation de la came d'embrochage, celle-ci coopère avec le galet 33 par une zone configurée de telle sorte que pour un angle de rotation donné de la came d'embrochage, le déplacement du galet et du disjoncteur est important. Le disjoncteur 30 est donc progressivement extrait vers la position test. Le levier de commande 62, qui est solidaire du disjoncteur 30, se déplace avec celui-ci et se libère du levier de renvoi 70. Il reprend alors sa position inopérante sous la sollicitation de la force de rappel de son ressort 68.

Lors de la séquence d'extraction à partir de la position test, le levier de commande 62 entre en contact avec une première rampe de la came 61, qui l'amène dans sa position de commande d'ouverture contre la sollicitation de son ressort de rappel 68. A l'issue de cette première séquence, le disjoncteur est ouvert, quel qu'ait été son état précédent. Lorsque le mouvement d'extraction se poursuit, le levier de commande 62 rencontre une deuxième rampe de la came qui l'entraîne dans sa position de commande de fermeture. Il y a alors fermeture du disjoncteur à vide et interposition de la plaque 82 du cache cliquet 81 entre le cliquet d'entraînement 58 et la roue à rochet 56 du dispositif d'armement 50. Dans cette position, le doigt 64 du levier de commande 62 rencontre l'encoche 73 du cliquet de retenue 72 qui le retient dans la position de commande de fermeture. Il est alors impossible de réarmer le dispositif, puisque les verrous de commande d'ouverture 46 et de fermeture 55 sont tous deux maintenus ouverts et que la manette 59 est débrayée.

Inversement, lors de l'insertion du disjoncteur 30 dans le châssis 10, le doigt 72 du cliquet de retenue 71 coopère avec une rampe de la came 61 qui le fait pivoter contre la sollicitation de son ressort de rappel 74 dans un sens éloignant l'encoche 73 du levier de commande 62 et libérant celui-ci.

Tel que décrit ci-dessus, le dispositif est directement utilisable pour le marché exigeant que l'appareil extrait soit ouvert et désarmé. Pour obtenir un fonctionnement sans désarmement lors du débrochage, il suffit d'installer une butée amovible venant se fixer sur le flasque latéral du disjoncteur et empêchant le levier de commande d'atteindre sa position de commande de fermeture. En pratique, on peut également adopter une démarche inverse: le flasque latéral du disjoncteur à la sortie d'usine comporte un rebord qui coopère avec le levier de commande dans sa position de commande d'ouverture et l'empêche d'atteindre sa position de commande de fermeture. Le disjoncteur tel quel est donc destiné au marché sans désarmement lors du débrochage. Si l'on souhaite adapter le disjoncteur au marché exigeant la décharge lors du débrochage, il suffit de casser ce rebord pour ménager une ouverture suffisante dans le flasque pour le passage du levier de commande dans sa deuxième position. La transformation est alors irréversible, mais elle évite la gestion d'une pièce supplémentaire.

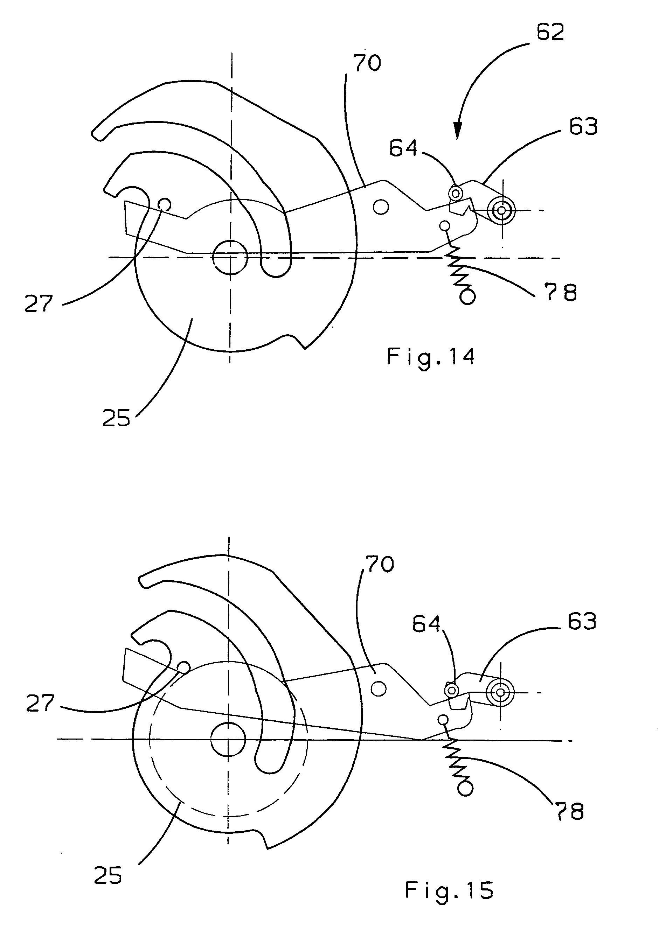

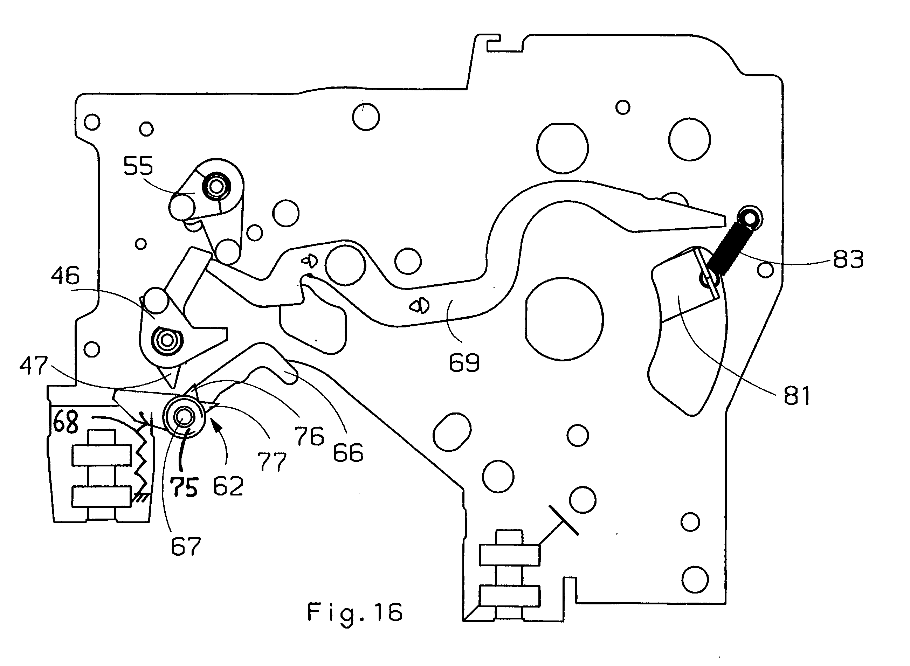

Suivant un deuxième mode de réalisation de l'invention, le levier de commande est sollicité par un ressort de rappel vers sa position de commande de fermeture et non vers sa position inopérante. Ceci permet d'éliminer le cliquet de retenue devenu inutile. Le fonctionnement du dispositif entre la position embrochée et la position test est représenté sur les figures 14 et 15. Le levier de renvoi 70 est sollicité dans le sens rétrograde (sens des aiguilles d'une montre) par le levier de commande 62 et dans le sens direct par le doigt 27 de la came d'embrochage 25. En position embrochée (figure 14), le doigt 27 impose sa position au levier de renvoi 70 qui bloque le levier de commande 62 dans sa position inopérante. Dès le début de la rotation de la came d'embrochage (figure 15), le doigt 27 libère le levier de renvoi 70 qui pivote dans le sens rétrograde sous la sollicitation du levier de commande 62 jusqu'à venir en butée contre une butée de fin de course. Le levier de commande 62 prend sa position de commande d'ouverture sous la sollicitation de son propre ressort de rappel. Lorsque la rotation de la came d'embrochage se poursuit, le disjoncteur poursuit son déplacement et quitte le contact avec le levier de renvoi pour coopérer avec la came 61 qui dans un premier temps le ramène dans la position inopérante. Le fonctionnement du dispositif entre la position débrochée et la position extraite du disjoncteur est identique au fonctionnement du premier mode de réalisation. Seule la forme de la came 61 doit être adaptée pour engendrer les mouvements adéquats du levier de commande 62. En pratique, la came doit comporter une première surface forçant le levier dans sa position inopérante lorsque le disjoncteur est dans sa position test, une deuxième autorisant le levier de commande 62 à pivoter dans sa position de première commande d'ouverture. En quittant cette deuxième surface, le levier de commande prend lui-même sa position de commande de fermeture sous la sollicitation de son ressort de rappel et tend à conserver cette position, si bien que comme on l'a dit, le levier de retenue est inutile. Inversement, lors de l'embrochage, des rampes adéquates de la came 61 permettent au levier de commande de reprendre successivement sa position de première commande d'ouverture et sa position inopérante.

On a schématisé en figure 16 le levier de commande 62 selon un troisième mode de réalisation de l'invention, dans une vue correspondant à la figure 8 du premier mode de réalisation. Au levier de commande 62 est solidarisé une came 75 en forme de disque comportant deux aspérités 76, 77 constituant chacune deux rampes à 45°. Ces aspérités sont aptes à coopérer avec un ergot 47 du verrou d'ouverture 46. Le levier de commande 62 peut prendre, par pivotement autour de son axe dans le sens direct, quatre positions: une position inopérante, une position de première commande d'ouverture, une position de commande de fermeture et une position de deuxième commande d'ouverture. Il est sollicité par un ressort de rappel 68 travaillant en traction, vers sa position de deuxième commande d'ouverture, dans le sens direct sur la figure.

Le fonctionnement du levier de commande entre la position embrochée et la position test est identique à celui du deuxième mode de réalisation.

En position débrochée, le levier de commande coopère avec une came correspondant à la came 61 du premier mode de réalisation, qui le maintient dans sa position inopérante. Lorsque débute le mouvement d'extraction à partir de la position débrochée, le levier de commande rencontre une rampe de la came 61, qui lui permet de pivoter jusqu'à sa position de première commande d'ouverture sous la sollicitation de son ressort de rappel. Au cours de ce pivotement, la première aspérité 76 de la came coopère avec l'ergot 47 du verrou d'ouverture 46 et fait pivoter le verrou 46 dans sa position déverrouillée. A la fin de cette phase de pivotement du levier de commande 62, la première aspérité 76 n'est plus en contact avec l'ergot 47 du verrou d'ouverture 46. Le verrou d'ouverture 46 est apte à se refermer sous la sollicitation de son propre ressort de rappel. En poursuivant l'extraction du disjoncteur, le levier de commande 62 rencontre une deuxième rampe de la came 61, qui lui permet de pivoter jusqu'à sa position de commande de fermeture sous la sollicitation de son ressort de rappel. Ce pivotement provoque, de manière identique au dispositif selon le premier mode de réalisation de l'invention, le pivotement du levier intermédiaire 69 qui attaque quasi-simultanément le verrou de fermeture 55 et le cache cliquet 81. En poursuivant l'extraction de l'appareil, le levier de commande 62 est libéré et pivote sous la sollicitation de son ressort de rappel. Ce pivotement permet à la deuxième aspérité 77 de la came 75 de coopérer avec l'ergot 47 du verrou d'ouverture 45 de manière analogue à la première aspérité, provoquant de nouveau un déverrouillage et un verrouillage du verrou d'ouverture 45. L'extraction à partir de la position débrochée donne donc lieu à la séquence de commandes suivante: ouverture, fermeture et débrayage de la manette de réarmement, puis ouverture. A la différence du premier mode de réalisation de l'invention, le verrou d'ouverture 46 n'est pas maintenu ouvert lors de la fermeture. Il n'y a donc pas de fermeture à vide des pôles du disjoncteur mais une fermeture normale. Cette disposition a l'avantage de ménager mécaniquement les dispositifs d'ouverture et de fermeture, notamment au niveau des butées de fin de course. Elle accroît donc leur fiabilité.

Lors du passage de la position extraite à la position débrochée, la séquence est inverse, chaque étape étant en soi réversible.

La description ci-dessus des modes préférentiels de réalisation de l'invention n'est pas limitative. En effet, certaines variantes apparaîtront immédiatement à l'homme du métier. Par exemple, il est clair que les leviers de commande 62 et de renvoi 70 peuvent être remplacés par tout autre élément mobile supporté par le disjoncteur, par exemple par des tirettes mobiles en translation. La came 61 qui comporte une pluralité de surfaces et de rampes coopérant avec le levier de commande 62 et éventuellement avec le cliquet de retenue 71 peut être remplacée par une pluralité de cames individuelles. Le levier de renvoi 70, dont la fonction est de donner une information sur le déplacement du disjoncteur avant que celui-ci ne soit perceptible, peut également être remplacé par tout élément susceptible de donner une information relative au mouvement d'un élément de la chaîne cinématique de transmission, par exemple une came solidaire de l'arbre d'embrochage 24.

Par ailleurs, la coopération entre la came 61 et le levier de commande 62 nécessite, dans les différents modes de réalisation décrits, un déplacement substantiel du disjoncteur par rapport au châssis entre les positions débrochée et embrochée. Or il existe des disjoncteurs dont le mécanisme d'embrochage réalise le passage d'une position test à une position embrochée alors que les parois externes du disjoncteur restent pratiquement immobiles. Il peut alors être avantageux de prendre l'information relative à l'état débroché, test ou embroché du disjoncteur non pas sur une partie fixe du châssis, mais sur la chaîne cinématique d'embrochage elle-même, qui est supportée par le châssis. L'invention porte donc également sur un appareillage comportant un disjoncteur à organe mobile de commande à trois ou quatre positions, coopérant avec un organe de liaison de la chaîne cinématique d'embrochage, notamment avec une came ou un doigt excentrique solidaire de l'organe de sortie de cette chaîne cinématique, par exemple une came solidaire de l'arbre d'embrochage. Cette coopération peut se faire directement ou indirectement par l'intermédiaire d'une pièce mobile supportée de préférence par le châssis.

Par ailleurs, la différenciation des disjoncteurs destinés aux deux marchés avec et sans décharge à l'extraction, dans les modes de réalisation décrits, n'est pas réversible puisqu'elle implique que soit cassé un rebord du flasque latéral du disjoncteur. Pour rendre cette action réversible, il suffit de prévoir une pièce amovible formant butée, à fixer par tout moyen approprié sur le rebord de l'ouverture agrandie du flasque de manière à reconstituer le rebord primitif.

## Revendications

1. Disjoncteur (30) comportant au moins une paire d'organes de contact (34, 35) dont l'un (34) au moins est mobile et peut prendre par rapport à l'autre (35) une position de fermeture correspondant au contact mécanique et électrique et une position d'ouverture, un dispositif d'ouverture (40) comportant un verrou dit d'ouverture (46) apte à prendre une position verrouillée dans laquelle il interdit le passage de l'organe de contact mobile (34) de sa position de fermeture à sa position d'ouverture et une position déverrouillée dans laquelle il autorise ce passage, un dispositif d'armement (50) comportant un ressort dit de fermeture (51) destiné, lors de sa détente, à déplacer l'organe de contact mobile (34) vers sa position de fermeture, et un verrou dit de fermeture (55) apte à verrouiller le ressort de fermeture (51) dans son état bandé, **caractérisé en ce qu'**il comporte un organe mobile de commande (62) accessible par l'extérieur du disjoncteur (30) et apte à prendre une position inopérante dans laquelle il n'interagit ni avec le verrou d'ouverture (46) ni avec le verrou de fermeture (55), une position de première commande d'ouverture et une position de commande de désarmement, l'organe mobile de commande (62) étant apte à déverrouiller le verrou d'ouverture (46) en passant de sa position inopérante à sa position de première commande d'ouverture, et à déverrouiller le verrou de fermeture (55) en passant de sa position de première commande d'ouverture à sa position de commande de désarmement.

2. Disjoncteur selon 1 a revendication 1, **caractérisé en ce qu'**il comporte un ressort de rappel de l'organe mobile de commande (62) vers sa position inopérante et un organe mobile de retenue (71) apte à prendre une position de retenue dans laquelle il retient l'organe mobile de commande (62) dans une position autre que la position inopérante et une position de libération dans laquelle il n'interagit pas avec l'organe mobile de commande (62).

3. Disjoncteur selon l'une quelconque des revendications 1 ou 2, **caractérisé en ce que** l'organe mobile de commande (62) est un levier.

4. Disjoncteur selon l'une quelconque des revendications 1 à 3, **caractérisé en ce que** l'organe mobile de commande (62), en passant de sa position de première commande d'ouverture à sa position de commande de désarmement, est apte à maintenir en position déverrouillée le verrou d'ouverture (46).

5. Disjoncteur selon l'une quelconque des revendications 1 à 3, **caractérisé en ce que** l'organe mobile de commande (62) est apte à prendre une position de deuxième commande d'ouverture, la position de commande de désarmement étant située entre la position de première commande d'ouverture et la position de deuxième commande d'ouverture, et **en ce que** l'organe mobile de commande (62), en passant dans sa position de commande de désarmement, n'interagit pas avec le verrou d'ouverture (46).

6. Disjoncteur selon l'une quelconque des revendications 1 à 5, **caractérisé en ce que** l'accès à la position de commande de désarmement de l'organe mobile de commande (62) est bloqué par un moyen de blocage, par exemple une butée rentrant en contact avec l'organe mobile de commande avant que celui-ci n'atteigne la position de commande de désarmement.

7. Appareillage de coupure comportant un disjoncteur (30) selon l'une quelconque des revendications précédentes et un châssis externe (10) fixe pourvu d'une chaîne cinématique d'embrochage (20) comportant au moins un arbre primaire (21) guidé en rotation par rapport au châssis et destiné à coopérer avec un organe d'entraînement (26), et un organe de sortie (25) apte à coopérer avec le disjoncteur (30) de sorte que la rotation de l'arbre primaire (21) provoque le mouvement de la chaîne cinématique de transmission entre une position débrochée et une position embrochée et le passage correspondant du disjoncteur (30) de manière réversible d'un état débroché à un état embroché, **caractérisée en ce que** le châssis (10) ou la chaîne cinématique d'embrochage (20) comporte en outre au moins un organe de liaison (61) à l'organe mobile de commande (62), apte à coopérer directement ou indirectement avec l'organe mobile de commande (62) de manière à le faire passer dans sa position de première commande d'ouverture lorsque le disjoncteur (30) ou la chaîne cinématique de transmission (20) passe par une première position indexée, dans le sens du débrochage.

8. Appareillage de coupure la revendication 7, **caractérisée en ce que** le châssis (10) ou la chaîne cinématique d'embrochage (20) comporte en outre au moins un organe de liaison (61) à l'organe mobile de commande (62), apte à coopérer directement ou indirectement avec l'organe mobile de commande (62) de manière à le faire passer dans sa position de commande de désarmement lorsque le disjoncteur (30) passe par une deuxième position indexée par rapport au châssis (10), dans le sens du débrochage.

9. Appareillage de coupure selon l'une quelconque des revendications 7 ou 8,
**caractérisée en ce que** le châssis (10) ou la chaîne cinématique d'embrochage (20) comporte en outre au moins organe de liaison (27) à l'organe mobile de commande (62), apte à coopérer directement ou indirectement avec l'organe mobile de commande (62) lorsque le disjoncteur est dans sa position embrochée ou à proximité de celle-ci, de telle manière que le l'organe mobile de commande (62) passe de sa position inopérante à sa position de première commande d'ouverture lorsque le disjoncteur (10) quitte la position embrochée.

10. Appareillage de coupure selon la revendication 9, **caractérisée en ce que** l'organe de sortie (25) de la chaîne cinématique d'entraînement comporte au moins une came d'embrochage (25) destinée à coopérer avec un élément suiveur (33) du disjoncteur (30) de telle sorte que la rotation de la came d'embrochage (25) dans un sens provoque l'embrochage du disjoncteur (30) et que la rotation de la came d'embrochage (25) dans le sens opposé provoque le débrochage du disjoncteur (30), la zone de la came d'embrochage (25) correspondant à l'arrivée du disjoncteur (30) dans sa position embrochée étant conformée de façon à ce qu'une rotation importante de la came d'embrochage (25) corresponde à un déplacement faible ou nul du disjoncteur (30) par rapport au châssis.

## Claims

1. Circuit breaker (30) comprising at least one pair of contact parts (34, 35) at least one (34) of which is movable and can take with respect to the other (35) a closed position corresponding to mechanical and electrical contact and an open position, an opening device (40) comprising a latch called the opening latch (46) designed to take a latched position in which it prevents movement of the movable contact part (34) from its closed position to its open position and an unlatched position in which it enables this movement, a loading device (50) comprising a spring called the closing spring (51) designed, when relaxation thereof takes place, to move the movable contact part (34) to its closed position, and a latch called the closing latch (55) designed to latch the closing spring (51) in its loaded state, **characterized in that** it comprises a movable control part (62) accessible from the outside of the circuit breaker (30) and designed to take an inoperative position in which it does not interact either with the opening latch (46) or with the closing latch (55), a first opening control position and an unloading control position, the movable control part (62) being designed to unlatch the opening latch (46) by moving from its inoperative position to its first opening control position, and to unlatch the closing latch (55) by moving from its first opening control position to its unloading control position.

2. Circuit breaker according to claim 1, **characterized in that** it comprises a return spring to return the movable control part (62) to its inoperative position and a movable latching part (71) designed to take a latching position in which it latches the movable control part (62) in a position other than the inoperative position and a released position in which it does not interact with the movable control part (62).

3. Circuit breaker according to either one of the claims 1 or 2, **characterized in that** the movable control part (62) is a lever.

4. Circuit breaker according to any one of the claims 1 to 3, **characterized in that** the movable control part (62), when moving from its first opening control position to its unloading control position, is designed to secure the opening latch (46) in the unlatched position.

5. Circuit breaker according to any one of the claims 1 to 3, **characterized in that** the movable control part (62) is able to take a second opening control position, the unloading control position being situated between the first opening control position and the second opening control position, and that the movable control part (62), when moving to its unloading control position, does not interact with the opening latch (46).

6. Circuit breaker according to any one of the claims 1 to 5, **characterized in that** access to the unloading control position of the movable control part (62) is disabled by a blocking means, for example a stop coming into contact with the movable control part before the latter reaches the unloading control position.

7. Switchgear apparatus comprising a circuit breaker (30) according to any one of the foregoing claims and a fixed external frame (10) equipped with a kinematic engagement system (20) comprising at least one primary shaft (21) guided in rotation with respect to the frame and designed to operate in conjunction with a drive part (26), and an output part (25) designed to operate in conjunction with the circuit breaker (30) in such a way that rotation of the primary shaft (21) causes movement of the kinematic transmission system between a plugged-out position and a plugged-in position and corresponding movement of the circuit breaker (30) in reversible manner from a plugged-out state to a plugged-in state, **characterized in that** the frame (10) or kinematic engagement system (20) in addition comprises at least one link part (61) for connection to the movable control part (62), designed to co-operate directly or indirectly with the movable control part (62) so as to move the latter to its first opening control position when the circuit breaker (30) or kinematic transmission system (20) passes via a first indexed position, in the plug-out direction.

8. Switchgear apparatus according to claim 7, **characterized in that** the frame (10) or kinematic engagement system (20) in addition comprises at least one link part (61) for connection to the movable control part (62), designed to co-operate directly or indirectly with the movable control part (62) so as to move the latter to its unloading control position when the circuit breaker (30) passes via a second indexed position with respect to the frame (10), in the plug-out direction.

9. Switchgear apparatus according to either one of the claims 7 or 8, **characterized in that** the frame (10) or kinematic engagement system (20) in addition comprises at least one link part (27) for connection to the movable control part (62), designed to co-operate directly or indirectly with the movable control part (62) when the circuit breaker is in its plugged-in position or near to this position, in such a way that the movable control part (62) moves from its inoperative position to its first opening control position when the circuit breaker (30) leaves the plugged-in position.

10. Switchgear apparatus according to claim 9, **characterized in that** the output part (25) of the kinematic engagement system comprises at least one engagement cam (25) designed to operate in conjunction with a follower element (33) of the circuit breaker (30) in such a way that rotation of the engagement cam (25) in one direction causes plug-in of the circuit breaker (30) and that rotation of the engagement cam (25) in the opposite direction causes plug-out of the circuit breaker (30), the zone of the engagement cam (25) corresponding to the circuit breaker (30) reaching its plugged-in position being shaped in such a way that a large rotation of the engagement cam (25) corresponds to a small or nil movement of the circuit breaker (30) with respect to the frame.

## Patentansprüche

1. Leistungsschalter (30), der mindestens zwei Schaltstücke (34, 35), von denen mindestens eines (34) beweglich ausgeführt ist und in Bezug zum anderen (35) eine Einschaltstellung entsprechend einer mechanischen und elektrischen Kontaktverbindung zwischen den beiden Schaltstücken sowie eine Ausschaltstellung einnehmen kann, eine Ausschaltvorrichtung (40) mit einer als Ausschaltklinke (46) bezeichneten Klinke, die eine Verriegelungsstellung, in der sie den Übergang des beweglichen Schaltstücks (34) von dessen Einschaltstellung in dessen Ausschaltstellung verhindert, sowie eine Entriegelungsstellung einnehmen kann, in der sie diesen Übergang erlaubt, eine Spannvorrichtung (50) mit einer als Einschaltfeder (51) bezeichneten Feder, die dazu dient, bei ihrer Entspannung das bewegliche Schaltstück (34) in dessen Einschaltstellung zu verschieben, sowie eine als Einschaltklinke (55) bezeichnete Klinke umfasst, die in der Lage ist, die Einschaltfeder (51) in ihrer Spannstellung zu verriegeln, **dadurch gekennzeichnet, dass** der Leistungsschalter ein bewegliches Steuerorgan (62) umfasst, das von der Außenseite des Leistungsschalters (30) zugänglich ist und eine passive Stellung, in der es weder mit der Ausschaltklinke (46) noch mit der Einschaltklinke (55) zusammenwirkt, eine erste Ausschalt-Steuerstellung und eine Entspannungs-Steuerstellung einnehmen kann, wobei das bewegliche Steuerorgan (62) in der Lage ist, durch Übergang von seiner passiven Stellung in seine erste Ausschalt-Steuerstellung die Ausschaltklinke (46) zu entriegeln und durch Übergang von seiner ersten Ausschalt-Steuerstellung in seine Entspannungs-Steuerstellung die Einschaltklinke (55) zu entriegeln.

2. Leistungsschalter nach Anspruch 1, **dadurch gekennzeichnet, dass** er eine Rückholfeder zur Überführung des beweglichen Steuerorgans (62) in dessen passive Stellung sowie ein bewegliches Rückhalteelement (71) umfasst, das eine Rückhaltestellung, in der es das bewegliche Steuerorgan (62) in einer anderen als der passiven Stellung hält, sowie eine Freigabestellung einnehmen kann, in der es nicht mit dem beweglichen Steuerorgan (62) zusammenwirkt.

3. Leistungsschalter nach irgendeinem der Ansprüche 1 oder 2, **dadurch gekennzeichnet, dass** das bewegliche Steuerorgan (62) als Hebel ausgebildet ist.

4. Leistungsschalter nach irgendeinem der Ansprüche 1 bis 3, **dadurch gekennzeichnet, dass** das bewegliche Steuerorgan (62) beim Übergang von seiner ersten Ausschalt-Steuerstellung in seine Entspannungs-Steuerstellung die Ausschaltklinke (46) in ihrer Entriegelungsstellung halten kann.

5. Leistungsschalter nach irgendeinem der Ansprüche 1 bis 3, **dadurch gekennzeichnet, dass** das bewegliche Steuerorgan (62) eine zweite Ausschalt-Steuerstellung einnehmen kann, wobei die Entspannungs-Steuerstellung zwischen der ersten Ausschalt-Steuerstellung und der zweiten Ausschalt-Steuerstellung liegt, und das bewegliche Steuerorgan (62) bei seinem Übergang in die Entspannungs-Steuerstellung nicht mit der Ausschaltklinke (46) zusammenwirkt.

6. Leistungsschalter nach irgendeinem der Ansprüche 1 bis 5, **dadurch gekennzeichnet, dass** der Zugang zur Entspannungs-Steuerstellung des beweglichen Steuerorgans (62) durch ein Blockierelement, beispielsweise einen Anschlag blockiert wird, der mit dem beweglichen Steuerorgan in Berührung gelangt, bevor dieses die Entspannungs-Steuerstellung erreicht.

7. Schaltgerät mit einem Leistungsschalter (30) nach irgendeinem der vorhergehenden Ansprüche und einem feststehenden äußeren Chassis (10) mit einer kinematische Einfahrkette (20), die mindestens eine in Bezug zum Chassis drehwirksam geführte Antriebswelle (21), welche dazu dient, mit einem Antriebsglied (26) zusammenzuwirken, sowie ein Ausgangsglied (25) umfasst, das dazu dient, mit dem Leistungsschalter (30) zusammenzuwirken, derart dass die Drehung der Antriebswelle (21) die Verschiebung der kinematischen Getriebekette zwischen einer Trennstellung und einer Betriebsstellung sowie den entsprechenden, umkehrbaren Übergang des Leistungsschalters (30) von einem Trennzustand in einen Betriebszustand bewirkt, **dadurch gekennzeichnet, dass** das Chassis (10) bzw. die kinematische Einfahrkette (20) außerdem mindestens ein Verbindungsglied (61) zur Kopplung mit dem beweglichen Steuerorgan (62) umfasst, das dazu dient, direkt oder indirekt mit dem beweglichen Steuerorgan (62) zusammenzuwirken, derart dass es dieses in seine erste Ausschalt-Steuerstellung überführt, wenn der Leistungsschalter (30) bzw. die kinematische Getriebekette (20) in Trennrichtung gesehen eine erste definierte Stellung passiert.

8. Schaltgerät nach Anspruch 7, **dadurch gekennzeichnet, dass** das Chassis (10) bzw. die kinematische Einfahrkette (20) außerdem mindestens ein Verbindungsglied (61) zur Kopplung mit dem beweglichen Steuerorgan (62) umfasst, das dazu dient, direkt oder indirekt mit dem beweglichen Steuerorgan (62) zusammenzuwirken, derart dass es dieses in seine Entspannungs-Steuerstellung überführt, wenn der Leistungsschalter (30) in Trennrichtung eine in Bezug zum Chassis (10) definierte, zweite Stellung passiert.

9. Schaltgerät nach irgendeinem der Ansprüche 7 oder 8, **dadurch gekennzeichnet, dass** das Chassis (10) bzw. die kinematische Einfahrkette (20) außerdem mindestens ein Verbindungsglied (27) zur Kopplung mit dem beweglichen Steuerorgan (62) umfasst, das dazu dient, direkt oder indirekt mit dem beweglichen Steuerorgan (62) zusammenzuwirken, wenn sich der Leistungsschalter in der Betriebsstellung oder in der Nähe dieser Stellung befindet, derart dass das bewegliche Steuerorgan (62) von seiner passiven Stellung in seine erste Ausschalt-Steuerstellung übergeht, wenn der Leistungsschalter (30) seine Betriebsstellung verlässt.

10. Schaltgerät nach Anspruch 9, **dadurch gekennzeichnet, dass** das Ausgangsglied (25) der kinematischen Antriebskette mindestens eine Einfahr-Steuerkurve (25) umfasst, die dazu dient, mit einem Nachführelement (33) des Leistungsschalters (30) zusammenzuwirken, derart dass die Drehung der Einfahr-Steuerkurve (25) in einer Richtung die Überführung des Leistungsschalters (30) in die Betriebsstellung bewirkt und dass die Drehung der Einfahr-Steuerkurve (25) in der entgegengesetzten Richtung die Trennung des Leistungsschalters (30) bewirkt, wobei der Abschnitt der Einfahr-Steuerkurve (25), der dem Übergang des Leistungsschalters (30) in die Betriebsstellung zugeordnet ist, eine solche Form aufweist, dass ein großer Verdrehwinkel der Einfahr-Steuerkurve (25) einer geringen bzw. keiner Verschiebung des Leistungsschalters (30) in Bezug zum Chassis entspricht.
